# DEMANDE DE BREVET EUROPEEN

(11) **EP 0 796 870 A1**
(43) Date de publication de la demande: **24.09.1997**
(21) Numéro de dépôt: 97400501.9
(22) Date de dépôt: 05.03.1997
(51) Int. Cl.: C08F 4/40, C08F 2/38, C08F 293/00

(54) **Procédé de polymérisation ou copolymérisation contrôlée de monomères (méth) acryliques et vinyliques et produits ainsi obtenus**

(30) Priorité: 21.03.1996 FR 9603536
(71) Demandeur: ELF ATOCHEM S.A., 92800 Puteaux (FR)
(72) Inventeur: Granel, Claude, 91120 Palaiseau (FR); Teyssie, Philippe, 4121 Neuville en Condroz (BE); Jerome, Robert, 4040 Tilff (BE); Nicol, Pascal, 64000 Pau (FR)
(74) Mandataire: Luziau, Nelly

(57) **Abrégé**

Le procédé de (co)polymérisation radicalaire contrôlée de monomères (méth) acryliques et/'ou vinyliques se caractérise en ce qu'on polymérise ou copolymérise en masse, solution, émulsion ou suspension, à une température pouvant descendre jusqu'à 0°C, au moins un desdits monomères en présence d'un système d'amorçage comprenant un composé générateur de radicaux et au moins un catalyseur constitué par un complexe de métal comportant un ligand du type

[C₆H₂(CH₂NR¹R²)₂-2,6-R³-4]⁻ (I)

dans lequel : R¹et R², identiques ou différents, représentent un groupe alkyle en C₁-C₄, ramifié ou non ou un groupe phényle, ou bien R¹ et R² forment avec l'atome d'azote auquel ils sont reliés une amine cyclique ou bien les deux R², pris ensemble, forment un pont polyméthylène et R³ représente un atome d'hydrogène, un groupe alkyle, benzyle ou un groupe fonctionnel donneur ou accepteur d'électrons.

## Description

La présente invention est relative à un procédé de polymérisation ou copolymérisation radicalaire contrôlée de monomères (méth) acryliques et/ou vinyliques (par exemple, vinylaromatiques) ainsi qu'aux polymères ou copolymères ainsi obtenus.

La polymérisation radicalaire constitue l'un des processus de polymérisation les plus exploités industriellement en raison de la variété des monomères polymérisables, de la facilité de mise en oeuvre et des procédés de synthèse utilisés (émulsion, suspension, masse, solution). Toutefois, il est difficile en polymérisation radicalaire classique de contrôler la dimension des chaînes polymères et la distribution des masses moléculaires. Les polymères ainsi préparés contiennent des chaînes de très grandes et très faibles masses (polydispersité large), ce qui conduit à des matériaux aux propriétés non contrôlées. De plus, l'addition séquencée de monomère conduit à un mélange d'homopolymères.

Les techniques de polymérisation anionique et cationique, quant à elles, permettent un contrôle correct du processus, mais les conditions de réaction qu'exigent ces méthodes de polymérisation ne sont pas toujours réalisables à l'échelle industrielle. De plus, de nombreux monomères ne peuvent être polymérisés par ces techniques.

Bien qu'il existe à ce jour quelques exemples de polymérisation radicalaire contrôlée de monomères (méth) acryliques ou vinylaromatiques, utilisant notamment les complexes RuCl₂(PPh₃)₃ (P = phosphore et Ph = phényle) et CuCl/2,2'-bipyridine, ces systèmes catalytiques ne se sont révélés actifs en polymérisation qu'à des températures supérieures à 100°C en absence d'activateurs. Or, lorsque la température est élevée, l'autoamorçage thermique se produit ce qui conduit, notamment, à une diminution du contrôle de la polymérisation.

En outre, pour la polymérisation en émulsion ou en suspension, il est connu que la plupart des procédés sont mis en oeuvre en milieu aqueux et, donc, il est nécessaire de travailler à des températures inférieures à 100°C pour assurer la stabilité de ces émulsions ou suspensions.

La température peut être, certes, abaissée, mais la présence d'acides de Lewis est alors nécessaire et cela implique de travailler en milieu anhydre.

Il est aussi nécessaire que le catalyseur ne soit pas dégradé par l'eau dans les conditions normales de polymérisation. Pour un meilleur contrôle de la polymérisation, il est, en outre, préférable de travailler en milieu homogène (c'est-à-dire avec un catalyseur qui reste soluble dans le milieu organique).

Le but de la présente invention consiste, par conséquent, à remédier aux inconvénients précités et à réaliser des polymérisations radicalaires qui permettent un contrôle identique aux polymérisations ioniques et coordinatives dans des conditions de synthèse acceptables industriellement et qui, par conséquent, permettent de synthétiser des homopolymères et des copolymères statistiques ou séquencés purs dont la longueur est prédéterminée.

D'une façon générale, le but de l'invention est de présenter un procédé de polymérisation ou copolymérisation radicalaire de monomères (méth) acryliques et/ou vinyliques permettant de contrôler la croissance des chaînes de polymères, le processus de polymérisation s'effectuant en masse, solution, émulsion ou suspension jusqu'à ce que la totalité du ou des monomères présents soit consommée.

Pour cela, il est nécessaire d'éviter ou tout au moins de limiter les réactions de terminaison par combinaison et de favoriser un amorçage rapide de la polymérisation ou copolymérisation.

C'est ainsi qu'un des buts essentiels de l'invention est de proposer des catalyseurs et des amorceurs qui permettent, sans nécessiter une modification appréciable de la technologie classique, d'obtenir, dans des conditions industriellement et économiquement valables, des polymères et copolymères répondant aux exigences commerciales de régiosélectivité, de stéréosélectivité, de contrôle des masses moléculaires et de leurs distributions.

A cet effet, on prévoit, suivant la présente invention, un procédé de polymérisation ou copolymérisation radicalaire contrôlée de monomères (méth) acryliques et/ou vinyliques, dans lequel on polymérise ou copolymérise en masse, solution, émulsion ou suspension à une température pouvant descendre jusqu'à 0°C, au moins un monomère (méth) acrylique et/ou vinylique en présence d'un système d'amorçage comprenant au moins un générateur de radicaux et au moins un catalyseur constitué par un complexe de métal comportant un ligand du type

[C₆H₂(CH₂NR¹R²)₂-2,6-R³-4]⁻, (I)

dans lequel :
R¹ et R², identiques ou différents, représentent un groupe alkyle en C₁-C₄, ramifié ou non ou un groupe phényle, ou bien R¹ et R² forment avec l'atome d'azote auquel ils sont reliés une amine cyclique ou bien les deux R₂, pris ensemble, forment un pont polyméthylène, et R₃ représente un atome d'hydrogène, un groupe alkyle ou benzyle ou un groupe fonctionnel donneur ou accepteur d'électrons.

Avantageusement, le ligand du catalyseur de polymérisation répond à l'une des formules générales suivantes : 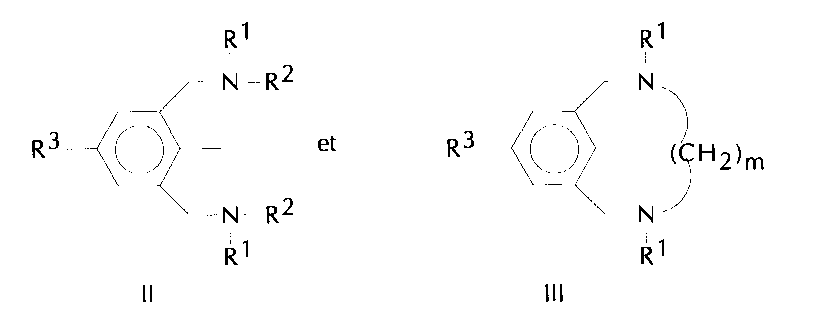 dans lesquelles :
R¹, R² et R³ sont tels que définis précédemment, et dans la formule III, les deux groupes aminés du ligand sont reliés par une chaîne formée de m (7 à 10) unités méthylène.

Suivant une forme de réalisation avantageuse de l'invention, le catalyseur de polymérisation répond à l'une des formules générales suivantes : 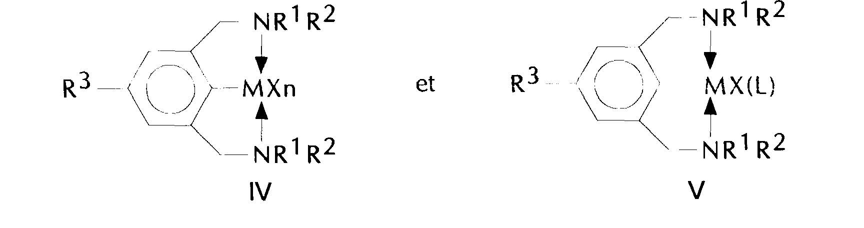 dans lesquelles :
R¹, R² et R³ sont tels que définis précédemment ;
M représente un élément métallique de transition, particulièrement un métal du groupe VIII du Tableau de classification périodique des éléments ;
X représente un groupe anionique monoatomique ou polyatomique ;
n représente un nombre entier égal à 0, 1 ou 2, dont la valeur dépend de l'état d'oxydation du métal M, et
L représente un ligand stabilisateur du type base de Lewis, tel qu'un groupe pyridine, phosphine ou phosphite.
Dans les formules I à V, indiquées précédemment, avantageusement, R¹ et R² représentent chacun un groupe choisi parmi les groupes méthyle, éthyle, isopropyle, tert-butyle et phényle ou bien R¹ et R² forment avec l'atome d'azote auquel ils sont reliés, un cycle pyrrolidinyle ou proline ou bien les deux R², pris ensemble, forment un pont polyméthylène ;
R³ représente un atome d'hydrogène ou de chlore ou un groupe cyano, nitro, amino primaire, secondaire ou tertiaire, alcoxy en C₁-C₅, alkyle en C₁-C₅, benzyloxy, benzyle, amide, acyle ou imine et le métal M est choisi parmi les éléments Ni, Pd, Pt, Co, Rh,lr, Fe, Ru et Os. Certains de ces catalyseurs, notamment les complexes de nickel sont déjà connus comme catalyseurs séparés et ont été décrits dans la littérature notamment par G. Van Koten et Coll. dans J.Mol.Catal. 45, p. 169 (1988) ; J. Chem. Mater Vol. 6, 1675 (1994), Nature 656, Vol. 372 (1994) ; Recl. Trav. Chim. Pays-Bas 113, p. 267 (1994) et Organometallics Vol. 13, 468 (1994).

Plus particulièrement, dans les formules des ligands et catalyseurs I à V, les substituants suivants sont considérés comme étant d'un grand intérêt :
- R¹ = R² = méthyle,
   R¹ = R² = éthyle,
   R¹ = méthyle et R² = isopropyle,
   R¹ = méthyle et R² = tert-butyle
   R¹ = méthyle et R² = phényle,
   R¹ = R² = phényle ; lorsque R¹ et R² forment avec l'atome d'azote auquel ils sont reliés un cycle pyrrolidinyle ou proline, on obtient des catalyseurs contenant des centres asymétriques, c'est-à-dire des centres chiraux possédant des isomères optiques. Le transfert d'informations chirales lors de la réaction avec le monomère à polymériser peut ainsi induire un stéréocontrôle de la polymérisation ou copolymérisation ;
- R³ représente, comme indiqué, un atome d'hydrogène ou de chlore et des groupes CN, NO₂ et NH₂, les groupes RNH-, RR'N-, RO-, R-, RC(O)NH-, RC(O)-, RR'CN- dans lesquels les substituants R et R' sont des groupes méthyle, éthyle, propyle, butyle, isopropyle, isobutyle, t-butyle, néopentyle ou benzyle. En outre, par l'intermédiaire de R³, R ou R', le catalyseur peut être supporté par ou greffé sur au moins un groupement organique ou inorganique, avantageusement la silice, un groupement polymère tel qu'au moins un polysilane, un polysiloxane constituant un point d'ancrage du catalyseur. C'est ainsi que, par le greffage de catalyseurs homogènes, on peut combiner les avantages de la catalyse homogène (sélectivité élevée et conditions réactionnelles douces) et de la catalyse hétérogène (recyclage). A titre d'exemples, on peut greffer le catalyseur métallique sur un dendrimère du type polysilane ou un polymère du type polysiloxane de la manière décrite par Lucia A. Van de Kuil et al dans Chem. Mater. Vol. 6, p. 1675 (1994) et par G. Van Koten et coll. dans Nature Vol. 372, p. 659 (1994).
- Le métal M : pour n = 1, M = Ni^{II}, Pd^{II}, Pt^{II}, Co^{II}, Ru^{II} ; pour n = 2, M = Ni^{III}, Fe^{III} ; lorsque M est, par exemple, Co^{II} ou Ru^{II}, le catalyseur est de préférence stabilisé par le ligand L du type pyridine, phosphite ou phosphine (catalyseur de formule V).
- X : un atome d'halogène, tel que Cl, Br et I, un groupe nitro, un groupe nitrate, une base conjuguée d'un acide carboxylique R⁴C00⁻ où R⁴ représente un atome d'hydrogène, un groupe alkyle en C₁-C₁₄, CF₃ ou CCl₃ (par exemple les groupes acétate, formiate, propanoate et trifluoroacétate), ou encore un groupe alkyl sulfonate R⁵SO₃- où R⁵ représente un groupe alkyle en C₁-C₁₄ ou CF₃, un exemple étant le groupe triflate CF₃SO₃⁻.

Le catalyseur ne jouant pas le rôle de générateur de radicaux, il est donc indispensable de lui associer un tel composé. On suppose qu'il interagira par transfert d'atomes redox ou par des cycles d'additions oxydantes suivis d'insertions et d'éliminations réductrices pour générer des chaînes polymère bien définies. C'est ainsi que la polymérisation se poursuivra si l'on ajoute une quantité supplémentaire de monomère polymérisable. On obtient un homopolymère si le monomère est de même nature, un copolymère statistique dans le cas de l'utilisation d'un mélange de comonomères différents et un copolymère séquencé dans le cas de l'addition d'une dose d'un monomère différent du premier après la polymérisation du premier monomère. Pour la préparation de copolymères séquencés, on peut envisager l'utilisation d'un mélange de deux ou plusieurs catalyseurs, la seconde dose de monomère étant additionnée en présence d'un catalyseur différent mais toujours du type tel que défini dans le cadre de la présente invention, ce catalyseur devant alors être plus actif que celui déjà présent. C'est ainsi que l'on peut répéter cette opération à chaque nouvelle séquence que l'on veut préparer.

Suivant l'invention, des composés générateurs de radicaux qui conviennent bien sont des composés halogénés activés par des effets électroniques donneurs et/ou accepteurs sur l'atome de carbone en position α du ou des halogènes dudit composé.

Lorsque le générateur de radicaux est monofonctionnel, il peut être choisi dans les classes de composés halogénés comprenant :
a) les tri-ou tétrahalométhanes de formule : CYZ₃ où Y = Cl, Br ou H et Z =Cl ou Br, par exemple le tetrachlorure de carbone, le chloroforme, le tétrabromure de carbone et le bromotrichlorométhane ;
b) les dérivés trichlorométhylés de formule : R⁶CCl₃ où R⁶ représente un groupe phényle, benzyle, benzoyle, éthoxycarbonyle, acycle dans lequel le groupe alkyle a de 1 à 4 atomes de carbone, méthyle, mésityle, trifluorométhyle ou nitro, comme par exemple, l'α,α,α-trichlorotoluène, l'α,α,α-trichloroacétophénone, le trichloroacétate d'éthyle, le 1,1,1-trichloroéthane, le 1,1,1-trichloro-2-phényléthane, le trichlorométhylmésitylène, le 1,1,1-trichlorotrifluoroéthane et le trichloronitrométhane;
c) les halogénures d'alkyle avec un groupe électroattracteur sur le carbone en α de l'halogène, de formules : 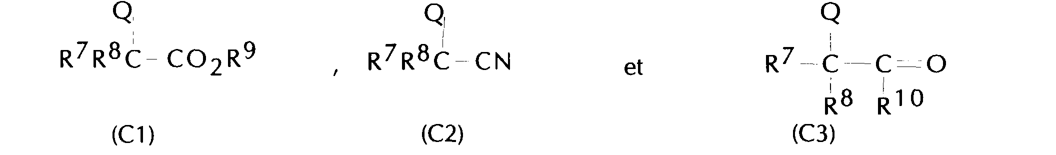 où R₇, R₈ et R₉, identiques ou différents, représentent chacun un atome d'hydrogène, un groupe alkyle en C₁-C₁₄ ou un groupe aromatique, par exemple du type benzénique, anthracénique ou naphtalénique, R¹⁰ représente un groupe alkyle en C₁-C₁₄, phenyle ou isocyanate, et Q représente un atome de chlore ou de brome ou un groupe trifluoroacétate (OOCCF₃) ou triflate (O₃SCF₃) comme, par exemple, l'acide 2-bromopropionique, l'acide 2-bromobutanoïque, l'acide 2-bromohexanoïque, le bromoacétonitrile, le 2-bromopropionitrile, la 2-bromoisobutyrophénone et le chloroacétylisocyanate ;
d) les composés halogénés de formule : 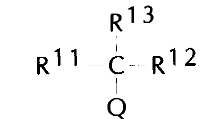 où R¹¹ et R^{12,} identiques ou différents représentent un groupe alkyle en C₁-C₁₄ ou un groupe alcool primaire -CH₂OH, R¹³ est un groupe fonctionnel tel que hydroxyle, nitro, amino subsitué ou non, alcoxy en C₁-C₁₄, acyle, acide carboxylique, ester, et Q a la signification donnée précédemment, par exemple le 2-bromo-2-nitro-1,3-propanediol et le 2-bromo-2-nitropropane ;
e) les composés lactone ou lactame halogéné en α comme l'α-bromo-α-méthyl-γ-butyrolactone ou α-bromo-γ-valérolactone, le lauryllactame halogéné ou le caprolactame halogéné ;
f) les halogènures benzyliques de formule : 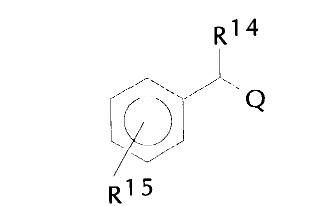 où R¹⁴ représente un atome d'hydrogène, un groupe alkyle en C₁-C₁₄ ou un groupe acide carboxylique, ester, nitrile ou cétone, R¹⁵ représente un atome d'hydrogène ou un groupe alkyle en C₁-C₁₄, hydroxyle, acyle, amine substituée ou non, nitro, alcoxy en C₁-C₁₄ ou sulfonate (SO₃-Na⁺ou K⁺) et Q a la signification donnée précédemment ;
g) les N-halosuccinimides comme le N-bromosuccinimide et les N-halophtalimides comme le N-bromophtalimide ;
h) les halogénures d'alkyl-sulfonyle de formule R¹⁶SO₂V où R¹⁶ représente un groupe alkyle en C₁-C₁₄ et V un atome de chlore ou de brome.

On peut également envisager l'utilisation de générateurs de radicaux bifonctionnels et multifonctionnels ; les générateurs de radicaux bifonctionnels peuvent être constitués de deux générateurs de radicaux monofonctionnels des classes c) à h) précitées reliés par une chaîne d'unités méthylène ou par un cycle benzénique, de préférence en position méta de celui-ci, tels que représentés par les formules :

A¹ - (CH₂)ₚ - A²

et

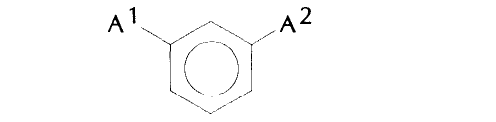

Les composés générateurs de radicaux multifonctionnels peuvent être constitués d'au moins trois groupements générateurs de radicaux monofonctionnels des classes c) à h) précitées reliés entre eux par un cycle benzénique comme, par exemple, ceux répondant à la formule : 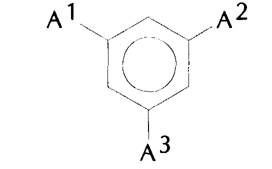 formules dans lesquelles A¹, A² et A³ sont identiques ou différents et représentent chacun un groupement générateur de radicaux monofonctionnel des classes c) à h) précitées et p représente un nombre entier de 1 à 14.

D'autres composés générateurs de radicaux bifonctionnels sont les tri- ou tétrahalométhanes et les dérivés trichlorométhylés des classes a) et b) précitées, ces mêmes tri- et tétrahalométhanes pouvant également servir de composés générateurs de radicaux multifonctionnels.

On citera comme composés générateurs de radicaux particulièrement avantageux le tétrachlorure de carbone, le trichloroacétate d'éthyle, le 2-bromo-isobutyrate d'éthyle. On peut aussi utiliser, notamment, pour la polymérisation en émulsion, le trichloroacétate de sodium, le trichloroacétate de potassium, le chlorodifluoroacétate de sodium, le chlorodifluoroacétate de potassium et le chloroacétate de sodium.

On pourrait également utiliser d'autres composés générateurs de radicaux difonctionnels que ceux présentés ci-dessus, notamment ceux de la famille des anhydrides acétiques comme l'anhydride d'acide chloroacétique et l'anhydride d'acide chlorodifluoroacétique.

Un autre moyen d'amorcer la polymérisation consiste à amorcer celle-ci à l'aide d'amorceurs radicalaires couramment utilisés en polymérisation radicalaire. Ainsi, les familles d'amorceurs utilisables pourraient être les suivantes :
- les composés azoïques, par exemple le 2,2'-azo-bis-isobutyronitrile (ou AIBN), le 1,1'-azo-bis(cyclohexanecarbonitrile) et l'acide 4,4'-azo-bis(4-cyano valerique),
- les composés peroxydiques, par exemple les peroxydes de diacyles, comme le peroxyde de dibenzoyle et le peroxyde de didodécanoyle, les peroxydes de dialkyles, comme le peroxyde de ditertiobutyle et le peroxyde diisopropyle, les peroxydes de diaralkyle, comme le peroxyde de dicumyle, les peroxy-dicarbonates, les peresters comme le peracétate de tert-butyle, le perpivalate de tert-amyle, le per-2-éthylhexanoate de butyle, le perpivalate de tert-butyle et le perbenzoate de tert-butyle, les hydroperoxydes, comme l'hydroperoxyde de tertiobutyle et les peroxydes inorganiques, comme l'eau oxygénée et les persulfates de sodium ou de potassium.

La longueur des chaînes polymère étant préalablement déterminée par le rapport du ou des monomères (méth) acryliques, vinyliques sur le composé générateur de radicaux, les proportions molaires du catalyseur au composé générateur de radicaux et du ou des monomères au catalyseur sont prépondérantes dans le cadre de la présente invention. C'est ainsi que le rapport molaire du catalyseur au composé générateur de radicaux sera de 0,01 à 100, avantageusement de 0,1 à 5 et que le rapport molaire du ou des monomères au catalyseur sera de 1 à 10.000, avantageusement de 50 à 2.000.

Le paramètre de la température de polymérisation ou de copolymérisation est un point extrêmement important qui distingue le procédé de l'invention des procédés utilisant des systèmes catalytiques actuellement connus. Avec les procédés catalytiques connus, il se produit une inactivité du catalyseur en dessous d'une température qui se situe autour de 100°C en l'absence d'activateur. C'est ainsi qu' à 50°C, il ne se produit pas de polymérisation avec le catalyseur CuCl/2,2-bipyrédine et, en l'absence d'activateur, avec le catalyseur RuCl₂(PPh₃)₃ et cela même après plusieurs jours de réaction. On peut parler, dans le cadre de la présente invention, de conditions réactionnelles douces car il est très peu courant que des catalyseurs en synthèse restent actifs à des températures pouvant descendre jusqu'à 0°C à la pression atmosphérique. Cet avantage est extrêmement important d'autant plus que le stéréocontrôle de la réaction de polymérisation ou copolymérisation est favorisé par un abaissement de la température. D'autre part, les conditions réactionnelles en masse (c'est-à-dire dans le ou les monomères purs) et en solution, émulsion ou suspension sont d'une manière générale identiques. La température et tous les rapports molaires peuvent être les mêmes quel que soit le procédé de réaction utilisé. La possibilité de travailler, sans risques, dans le monomère pur constitue bien entendu une amélioration au regard des polymérisations radicalaires classiques. La concentration en centres actifs étant constante tout au long de la réaction de polymérisation ou copolymérisation en raison de l'absence de réactions de terminaison, l'exothermie importante et brutale (ou effet Trommsdorf) des polymérisations radicalaires classiques ne se produit pas. Pour le procédé industriel, ceci constitue bien entendu un progrès important puisque les polymérisations ou copolymérisations menées dans ces conditions ne risquent plus de devenir explosives. D'une manière générale, la polymérisation ou copolymérisation sera effectuée à une température de 0°C à 150°C, avantageusement entre 50 et 110°C sans aucune perte d'activité du catalyseur.

Les systèmes d'amorçage selon l'invention étant compatibles avec l'eau, on pourra donc effectuer les réactions de polymérisation ou copolymérisation en milieu aqueux, en présence ou non d'émulsifiants. C'est ainsi que les polymérisations en milieu aqueux sont effectuées soit en suspension (composé générateur de radicaux insoluble dans l'eau) soit en émulsion (composé générateur de radicaux soluble dans l'eau) en présence d'émulsifiants. Les émulsifiants peuvent être des surfactants anioniques tels que le dodécylbenzène sulfonate de sodium, le dodécyl sulfate de sodium, le lauryl sulfate de sodium et leurs mélanges ou du type neutre comme les esters de glycol, les esters de sorbitane et de polyéthylène glycol tels que le monolaurate, le monopalmitate, oléate et stéarate de sorbitane et de polyéthylène glycol, les esters d'acides gras et de polyéthylène glycol tels que le stearate de polyéthylène glycol et les éthers d'alcool gras et de polyéthylène glycol tels que les éthers stéarylique et cétylique de polyéthylène glycol.

Les émulsifiants anioniques doivent être utilisés au-dessus de pH 7 afin de ne pas modifier la structure du catalyseur et par conséquent de désactiver celui-ci.

Les réactions de polymérisation ou copolymérisation de l'invention, lorsqu'elles sont menées en solution, peuvent bien entendu également se faire en présence d'un solvant organique ou d'un mélange de solvants organiques appartenant aux familles de solvants suivantes :
- les hydrocarbures aromatiques (apolaires aprotiques) : benzène, toluène, éthylbenzène, xylène ;
- les hydrocarbures chlorés (polaires aprotiques) : chlorure de méthylène, chlorobenzène ;
- les éthers cycliques (polaires aprotiques) : tétrahydrofuranne, dioxane ;
- les esters (polaires) : acétate d'éthyle, acétate de cyclohexyle ;
- les cétones (polaires) : méthyl éthyl cétone, cyclohexanone.

Les solvants organiques précités conviennent particulièrement bien lorsque les monomères à polymériser ou copolymériser sont des monomères acryliques (méthacrylates, acrylates, l'acrylonitrile) et vinylaromatiques tels que styréniques.

Dans certains cas, notamment dans la polymérisation du méthacrylate de n-butyle et du styrène, on pourra utiliser l'hexane et le cyclohexane et dans la polymérisation de l'acétate de vinyle et de l'acrylonitrile, on pourra utiliser le diméthylformamide, le diméthylsulfoxyde, l'acétonitrile ou l'acétone.

Suivant l'invention, la réaction de polymérisation ou copolymérisation peut également être effectuée en présence d'un additif polaire ou d'un mélange d'additifs polaires. La présence de ces additifs polaires peut être considérée comme étant avantageuse puisqu'elle permet de moduler les paramètres moléculaires et plus précisément de réduire la distribution des masses moléculaires et de s'approcher de l'isomolécularité ($\overline{\text{Mw}}$/$\overline{\text{Mn}}$ = 1). Des exemples non limitatifs d'additifs polaires sont l'acétonitrile (CH₃CN), l'eau, la pyridine, le tétrahydrofuranne, l'éther diéthylique, le diméthylsulfoxyde et l'acétone . Dans tous les cas, ces additifs polaires sont présents à l'état de traces ; c'est ainsi que la présence d'eau comme additif polaire n'est pas incompatible avec un solvant organique. D'une manière générale, le rapport molaire additif polaire/catalyseur est de 0 à 100 et avantageusement de 0 à 40.

D'une manière générale, le procédé de polymérisation et de copolymérisation suivant l'invention se déroule d'une manière identique pour l'homopolymérisation et la copolymérisation statistique. Pour la préparation de copolymères séquencés, les conditions expérimentales peuvent changer lors de l'addition d'un monomère différent du premier après la polymérisation du premier monomère. Par exemple, on peut faire varier la température dans un sens ou dans l'autre, la seconde dose pouvant être ajoutée avec un solvant. Pour la préparation de macromonomères ou de polymères α, ω fonctionnalisés (téléchéliques), on pourrait envisager le même type de variation de conditions expérimentales.

Comme monomères polymérisables et copolymérisables en présence du système d'amorçage de polymérisation ou copolymérisation proposé, on peut citer les monomères (méth) acryliques et vinyliques (vinylaromatiques, esters vinyliques comme acétate de vinyle).

Le système d'amorçage selon l'invention convient aussi pour la (co)polymérisation de monomères oléfiniques, éventuellement fluorés, comme l'éthylène, le butène, l'hexéne, le 1-octène. Il convient aussi pour la (co)polymérisation de monomères à doubles liaisons conjuguées, tels que butadiène et isoprène.

Par monomère acrylique au sens de la présente invention, on entend un monomère choisi parmi les acrylates d'alkyle primaire, secondaire ou tertiaire dont le groupe alkyle, le cas échéant substitué par exemple par au moins un atome d'halogène, tel que fluor, et/ou au moins un groupe hydroxyle, contient 1 à 18 atomes de carbone, en mentionnant plus particulièrement, l'acrylate d'éthyle, l'acrylate de propyle, l'acrylate d'isopropyle, l'acrylate de butyle, l'acrylate d'isobutyle, l'acrylate d'hexyle, l'acrylate de tertiobutyle, l'acrylate d'éthyl-2 hexyle, l'acrylate de nonyle, l'acrylate de lauryle, l'acrylate de stéaryle, l'acrylate de cyclohexyle, l'acrylate d'isodécyle, ainsi que l'acrylate de phényle, l'acrylate d'isobornyle, les acrylates d'alkylthioalkyle ou d'alcoxyalkyle, l'acrylonitrile et les dialkylacrylamides.

Par monomère méthacrylique au sens de la présente invention, on entend un monomère choisi parmi les méthacrylates d'alkyle dont le radical alkyle, le cas échéant substitué, par exemple par au moins un atome d'halogène comme le fluor et/ou au moins un groupe hydroxyle, contient 1 à 18 atomes de carbone, comme les méthacrylates de méthyle, d'éthyle, de 2,2,2-trifluoroéthyle, de n-propyle, d'isopropyle,de n-butyle, de sec.-butyle, de tert.-butyle, de n-amyle, d'i-amyle, d'hexyle, d'éthyl-2 hexyle, de cyclohexyle, d'octyle, d'i-octyle, de décyle, de β-hydroxy-éthyle, d'hydroxypropyle, d'hydroxybutyle, ainsi que le méthacrylate de glycidyle, le méthacrylate de norbornyle, le méthacrylonitrile et les dialkylméthacrylamides.

Par monomère vinylaromatique au sens de la présente invention, on entend un monomère aromatique à insaturation éthylénique tel que le styrène, le vinyltoluène, l'alphaméthylstyrène, le méthyle-styrène, le méthyl-3-styrène, le méthoxy-4-styrène, l'hydroxyméthyl-2-styrène, l'éthyle-4-styrène, l'éthoxy-4-styrène, le diméthyl-3,4,styrène, le chloro-2-styrène, le chloro-3-styrène, le chloro-4-méthyl-3-styrène, le tert. butyl-3-styrène, le dichloro-2,4-styrène, le dichloro-2,6-styrène et le vinyl-1-naphtalène.

Suivant l'invention, il a été constaté que, par une combinaison judicieuse, comme catalyseur, d'un complexe de métal comportant un ligand tel que défini précédemment, et d'un composé générateur de radicaux de polymérisation, on peut arriver à obtenir des homopolymères et des copolymères séquencés et statistiques parfaitement définis et contrôlés ainsi que des macromonomères et des polymères *α,* ω fonctionnalisés (téléchéliques) qui n'ont jusqu'ici pu être synthétisés avec les procédés de polymérisation radicalaire classiques.

L'invention concerne donc également les polymères ou copolymères tels qu'obtenus par le procédé précité, de masses moléculaires contrôlées et de polymolécularité étroite.

Les polymères et copolymères de monomères (méth) acryliques, vinyliques tels qu'obtenus par le procédé de l'invention présentent des masses moléculaires $\overline{\text{Mn}}$ se situant entre 400 et 1.000.000 g/mole et une polymolécularité $\overline{\text{Mw}}$/$\overline{\text{Mn}}$ particulièrement étroite, inférieure à 2 et de préférence inférieure à 1,5. Dans le cadre de la polymérisation radicalaire, ceci constitue un progrès important puisqu'il y a encore peu de temps, il était impensable d'obtenir des distributions de masses moléculaires ou polymolécularités $\overline{\text{Mw}}$/$\overline{\text{Mn}}$ inférieures à 1,5. De plus, le procédé de l'invention est extrêmement régiosélectif, c'est-à-dire qu'il permet un excellent contrôle sur l'orientation des unités monomères lors de la propagation. D'autre part, les enchaînements s'orientent exclusivement tête à queue et non plus tête à tête comme cela pouvait être le cas en polymérisation radicalaire classique. Cela favorise la stabilité thermique des polymères et copolymères ainsi préparés. L'absence de réactions de terminaison élimine toute autre possibilité d'enchaînement tête à tête.

En comparaison avec les procédés de polymérisation et de copolymérisation radicalaires et ioniques connus, le procédé de la présente invention présente les avantages suivants :
- excellent contrôle moléculaire : $\overline{\text{Mw}}$/$\overline{\text{Mn}}$ étroit jusqu'à environ $\overline{\text{Mw}}$/$\overline{\text{Mn}}$ = 1,1 ; bonne corrélation entre le $\overline{\text{Mn}}$ théorique et le $\overline{\text{Mn}}$ expérimental en fonction du générateur de radicaux ; possibilité de préparation de copolymères séquencés ;
- milieu de polymérisation homogène ;
- conditions de température douces allant de 0°C à 150°C ;
- compatibilité en milieu aqueux car les catalyseurs utilisés ne se dégradent pas en présence d'eau. Possibilité de polymérisation en émulsion et suspension ;
- possibilité de stéréocontrôle, c'est-à-dire du contrôle de la tacticité hétéro, syndio ou isotactique. Pour cela, on peut utiliser des catalyseurs avec des groupements aminés encombrés ou reliés entre eux par des enchaînements méthylène (encombrement d'une face du catalyseur) ainsi que des catalyseurs chiraux ;
- excellent contrôle de la synthèse des polymères ou copolymères obtenus dont les masses moléculaires varient entre 400 et 1.000.000 g/mole et plus particulièrement entre 4000 et 130.000 g/mole ;
- la résistance à la dégradation thermique des polymères et copolymères est améliorée en raison de l'absence de réactions de terminaison (combinaisons et disproportions), pouvant être montrée notamment par analyse thermogravimétrique ;
- obtention de nouveaux produits difficilement accessibles par les techniques de polymérisation usuelles, tels que copolymères séquencés purs, copolymères statistiques définis et polymères hyperbranchés utilisables comme adhésifs de formulation contrôlée, additifs antichocs, agents émulsifiants, agents interfaciaux.

Idéalement, dans un mécanisme vivant, tout le monomère est consommé, le rendement est donc de 100 % (quantitatif), mais il peut être inférieur pour diverses raisons et plus particulièrement :
- de cinétique (réaction lente) ;
- de viscosité qui empêche la diffusion du monomère et des chaînes de polymère en croissance ;

Cette explication concerne la plupart des exemples dans lesquels le rendement varie de 80 à 90 %. En effet, le milieu réactionnel se vitrifie rapidement en raison des propriétés des polymères obtenus (la température de transition vitreuse étant supérieure à la température de polymérisation).

En général, le rendement peut être aussi inférieur à 100 % par suite de la présence de réactions de terminaison ; cependant, ce n'est pas le cas dans le cadre du procédé de la présente invention puisque ces réactions n'existent pas ou du moins qu'elles ne sont pas décelables expérimentalement.

On donne ci-après des exemples non limitatifs décrivant la préparation de polymères et copolymères tels qu'obtenus suivant le procédé de la présente invention.

### Exemple 1

### Polymérisation de méthacrylate de méthyle

1,87 g de méthacrylate de méthyle sont ajoutés à 33 mg (10⁻⁴ mole) de catalyseur [Ni{C₆H₃[CH₂N(CH₃)₂]₂-2,6}Br] sous atmosphère inerte. On injecte 11 mg (7,2x10⁻⁵ mole) de tétrachlorure de carbone en solution dans 0,34 g de toluène dans le tube qui contient le catalyseur et le monomère. Le tube est scellé après dégazage, puis placé dans un bain d'huile à une température de l'ordre de 76 à 78°C. La polymérisation dure 19 heures. Le polymère est récupéré par précipitation au méthanol, puis analysé.

On obtient un rendement de 84 % de polymère.
◆ $\overline{\text{Mn}}$ₑₓₚ = 32 100 g/mole (étalon de polyméthacrylate de méthyle).
◆ $\overline{\text{Mn}}$_{théo}= 28 800 g/mole.
◆ $\overline{\text{Mw}}$/$\overline{\text{Mn}}$ =1,28.

Ces dernières valeurs sont obtenues de la façon suivante. On effectue une chromatographie d'exclusion stérique (SEC) qui permet de séparer les macromolécules de PMMA (polyméthacrylate de méthyle) suivant leur taille en solution (volume hydrodynamique). Elles sont alors éluées par un solvant (phase mobile de THF) du polyméthacrylate de méthyle. Les plus grosses molécules sortent en premier et les plus petites en dernier en raison du parcours plus long dans les pores de la colonne (phase stationnaire). Des PMMA ou du polystyrène de masses absolues connues (déterminées par une autre technique) sont également injectées (étalons) et permettent d'obtenir une courbe d'étalonnage à partir de laquelle on détermine les masses moléculaires relatives ($\overline{\text{Mn}}$ₑₓₚ) du polymère dont on veut connaître la taille et la distribution des masses ou polydispersité ($\overline{\text{Mw}}$/$\overline{\text{Mn}}$).

### Exemple 2

### Polymérisation de méthacrylate de méthyle

On procède comme dans l'exemple 1 à l'exception qu'on ajoute à la solution mère (c'est-à-dire monomère, solvant et catalyseur) de l'acétonitrile comme additif polaire.
◆ [Ni{C₆H₃[CH₂N(CH₃)₂]₂-2,6}Br] = 33 mg (10⁻⁴ mole),
◆ Méthacrylate de méthyle = 1,87 g,
◆ CCl₄ = 11 mg (7,2x10⁻⁵ mole),
◆ Toluène = 0,34 g
◆ CH₃CN = 78,6 mg (1,9x10⁻³ mole),
◆ Durée de polymérisation = 19 h,
◆ Température du bain d'huile = 76-78°C.
◆ $\overline{\text{Mn}}$ₑₓₚ = 19 000 g/mole (étalon de PMMA) ; $\overline{\text{Mn}}$_{théo} = 20 500 g/mole ;
◆ Rendement = 79 % ; $\overline{\text{Mw}}$/$\overline{\text{Mn}}$ = 1,19.

### Exemple 3

### Polymérisation de méthacrylate d'éthyle

On procède comme dans l'exemple 2.
◆ [Ni{C₆H₃[CH₂N(CH₃)₂]₂-2,6}Br] = 33 mg (10⁻⁴ mole),
◆ Méthacrylate d'éthyle = 0,92 g,
◆ CCl₄ = 3 mg (2x10⁻⁵ mole),
◆ CH₃CN = 0,8 mg (2x10⁻⁵ mole),
◆ Toluène = 0,17 g,
◆ Durée de polymérisation = 37,5 h,
◆ Température du bain d'huile = 76-78°C.
◆ $\overline{\text{Mn}}$ₑₓₚ = 21 400 g/mole (étalon de PMMA) ; $\overline{\text{Mn}}$_{théo} = 41 500 g/mole ;
◆ Rendement = 90 % ; $\overline{\text{Mw}}$/$\overline{\text{Mn}}$ = 1,14.

### Exemple 4

### Polymérisation de méthacrylate de méthyle

On procède comme dans l'exemple 2.
◆ [Ni{C₆H₃[CH₂N(CH₃)₂]₂-2,6}Br] = 33 mg (10⁻⁴ mole),
◆ Méthacrylate de méthyle = 1,87 g,
◆ CCl₄ = 11 mg (7,2x10⁻⁵ mole),
◆ Toluène = 0,34 g,
◆ CH₃CN = 78,6 mg (1,9x10⁻³ mole),
◆ Durée de polymérisation = 216 h,
◆ Température du bain d'huile = 50°C.
◆ $\overline{\text{Mn}}$ₑₓₚ = 9 300 g/mole (étalon de PMMA) ; $\overline{\text{Mn}}$_{théo} = 9 400 g/mole ;
◆ Rendement = 36 % ; $\overline{\text{Mw}}$/$\overline{\text{Mn}}$ = 1,14.

### Exemple 5

### Polymérisation de méthacrylate de n-butyle

On procède comme dans l'exemple 2.
◆ [Ni{C₆H₃[CH₂N(CH₃)₂]₂-2,6}Br] = 33 mg (10⁻⁴ mole),
◆ Méthacrylate de n-butyle = 1,78 g,
◆ CCl₄ = 11 mg (7,2x10⁻⁵ mole),
◆ Toluène = 0,34 g,
◆ CH₃CN = 0,16 g (3,8x10⁻³ mole),
◆ Durée de polymérisation = 76 h,
◆ Température du bain d'huile = 76-78°C.
◆ $\overline{\text{Mn}}$ₑₓₚ = 11 900 g/mole (étalon de PMMA) ; $\overline{\text{Mn}}$_{théo} = 22 800 g/mole ;
◆ Rendement = 92 % ; $\overline{\text{Mw}}$/$\overline{\text{Mn}}$ = 1,15.

### Exemple 6

### Copolymérisation statistique de méthacrylate de méthyle/méthacrylate d'éthyle

On procède comme dans l'exemple 2 mais en partant d'un mélange de méthacrylates.
◆ [Ni{C₆H₃[CH₂N(CH₃)₂]₂-2,6}Br] = 33 mg (10⁻⁴ mole),
◆ Méthacrylate de méthyle = 0,94 g,
◆ Méthacrylate d'éthyle = 1 g
◆ CCl₄ = 11 mg (7,2x10⁻⁵ mole),
◆ Toluène = 0,34 g,
◆ CH₃CN = 0,16 g (3,8x10⁻³ mole),
◆ Durée de polymérisation = 68 h,
◆ Température du bain d'huile = 76-78°C.
◆ $\overline{\text{Mn}}$ₑₓₚ = 13 400 g/mole (étalon de PMMA) ; $\overline{\text{Mn}}$_{théo} = 24 400 g/mole ;
◆ Rendement = 90 % ; $\overline{\text{Mw}}$/$\overline{\text{Mn}}$ = 1,14.

### Exemple 7

### Polymérisation de styrène

On procède comme dans l'exemple 1.
◆ [Ni{C₆H₃[CH₂N(CH₃)₂]₂-2,6}Br] = 21,8 mg (6,62,10⁻⁵ mole),
◆ Styrène = 0,54 g
◆ CCl₄ = 7,69 mg (4,99x10⁻⁵ mole)
◆ THF = 0,62 g
◆ Durée de polymérisation = 42 h,
◆ Température du bain d'huile = 70°C pendant 21 h, puis 110°C pendant 21h.
◆ Rendement = 92 % ;
◆ $\overline{\text{Mn}}$ₑₓₚ = 18 200 g/mole ; $\overline{\text{Mn}}$_{théo} = 10 000 g/mole ; $\overline{\text{Mw}}$/$\overline{\text{Mn}}$ = 1,68.

### Exemple 8

### Polymérisation de méthacrylate de méthyle

On procède comme dans l'exemple 2.
◆ [Ni{C₆H₃[CH₂N(CH₃)₂]₂-2,6}Br] = 33 mg (10⁻⁴ mole),
◆ Méthacrylate de méthyle = 1,87 g,
◆ (CH₃)₂C(Br)CO₂éthyle = 14,78 mg (7,56 x 10⁻⁵ mole),
◆ CH₃CN = 78,6 mg (1,9 x 10⁻³ mole),
◆ Toluène = 0,4 ml
◆ Durée de polymérisation = 23 h,
◆ Température du bain d'huile = 80°C,
◆ $\overline{\text{Mn}}$ₑₓₚ = 21 400 g/mole (étalon de polystyrène) ;
◆ $\overline{\text{Mn}}$_{théo} = 17 500 g/mole ; Rendement = 67 % ; $\overline{\text{Mw}}$/$\overline{\text{Mn}}$ = 1,11.

### Exemple 9

### Polymérisation de méthacrylate de méthyle

On procède comme dans l'exemple 1.
◆ [Ni{C₆H₃[CH₂N(CH₃)₂]₂-2,6}Br] = 33 mg (10⁻⁴ mole),
◆ Méthacrylate de méthyle = 1,87 g,
◆ (CH₃)₂C(Br)CO₂éthyle = 14,78 mg (7,56 x 10⁻⁵ mole) ,
◆ Toluène = 0,4 ml
◆ Durée de polymérisation = 24 h,
◆ Température du bain d'huile = 80-82°C.
◆ $\overline{\text{Mn}}$ₑₓₚ = 21 900 g/mole (étalon de polystyrène) ;
◆ $\overline{\text{Mn}}$_{théo} = 18 200 g/mole ; rendement = 70 % ; $\overline{\text{Mw}}$/$\overline{\text{Mn}}$ = 1,11.

### Exemple 10

### Polymérisation de méthacrylate de méthyle

On procède comme dans l'exemple 1.
◆ [Ni{C₆H₃[CH₂N(CH₃)₂]₂-2,6}Br] = 47 mg (1,42 x 10⁻⁴ mole),
◆ Méthacrylate de méthyle = 5,61 g,
◆ (CH₃)₂C(Br)CO₂éthyle = 7 mg (3,6 x 10⁻⁵ mole),
◆ Toluène = 0,2 ml
◆ Durée de polymérisation = 43 h,
◆ Température du bain d'huile = 80°C,
◆ $\overline{\text{Mn}}$ₑₓₚ = 117 600 g/mole (étalon de polystyrène) ;
◆ $\overline{\text{Mn}}$_{théo} = 136 000 g/mole ; Rendement = 87 % ; $\overline{\text{Mw}}$/$\overline{\text{Mn}}$ = 1,61.

### Exemple 11

### Polymérisation de méthacrylate de méthyle

On procède comme dans l'exemple 1.
◆ [Ni{CH₃O-4-C₆H₂[CH₂N(CH₃)₂]₂-2,6}Br] = 36 mg (10⁻⁴ mole),
◆ Méthacrylate de méthyle = 1,87 g,
◆ (CH₃)₂C(Br)CO₂éthyle = 23,4 mg (1,19 x 10⁻⁴ mole),
◆ Toluène = 0,26 g,
◆ Durée de polymérisation = 23 h,
◆ Température du bain d'huile = 80°C.
◆ $\overline{\text{Mn}}$ₑₓₚ = 14 700 g/mole (étalon de polystyrène) ;
◆ $\overline{\text{Mn}}$_{théo} = 10 300 g/mole ; Rendement = 66 % ; $\overline{\text{Mw}}$/$\overline{\text{Mn}}$ = 1,09.

### Exemple 12

### Polymérisation de méthacrylate de méthyle

On procède comme dans l'exemple 1.
◆ [Ni{C₆H₃[CH₂N(CH₃)₂]₂-2,6}Br] = 6,6 mg (2 x 10⁻⁵ mole),
◆ Méthacrylate de méthyle = 1,87 g
◆ (CH₃)₂C(Br)CO₂éthyle = 39 mg (1,99 x 10 ⁻⁴ mole),
◆ Toluène = 0,5 ml
◆ Durée de polymérisation = 22,5 h,
◆ Température du bain d'huile = 80°C.
◆ $\overline{\text{Mn}}$ₑₓₚ = 8 500 g/mole (étalon de polystyrène) ;
◆ $\overline{\text{Mn}}$_{théo} = 4 900 g/mole ; Rendement = 52 % ; $\overline{\text{Mw}}$/$\overline{\text{Mn}}$ = 1,16.

### Exemple 13

### Polymérisation de méthacrylate de méthyle

On procède comme dans l'exemple 1.
◆ [Ni{C₆H₃[CH₂N(CH₃)₂]₂-2,6}Cl] = 28,5 mg (10⁻⁴ mole),
◆ Méthacrylate de méthyle = 1,87 g,
◆ (CH₃)₂C(Br)CO₂éthyle = 23,4 mg (1,19 x 10 ⁻⁴ mole),
◆ Toluène = 0,26 g,
◆ Durée de polymérisation = 23 h,
◆ Température du bain d'huile = 80°C.
◆ $\overline{\text{Mn}}$ₑₓₚ = 12 900 g/mole (étalon de polystyrène) ;
◆ $\overline{\text{Mn}}$_{théo} = 10 700 g/mole ; Rendement = 68 % ; $\overline{\text{Mw}}$/$\overline{\text{Mn}}$ = 1,11.

### Exemple 14

### Polymérisation de méthacrylate de méthyle

On procède comme dans l'exemple 2.
◆ [Ni{C₆H₃[CH₂N(CH₃)₂]₂-2,6}Br] = 33 mg (10⁻⁴ mole),
◆ Méthacrylate de méthyle = 1,87 g,
◆ (CH₃CN) = 78 mg,
◆ (EtO(CO)CCl₃) = 7,65 mg (4 x 10⁻⁵ mole),
◆ Toluène = 0,4 ml,
◆ Durée de polymérisation = 26 h,
◆ Température du bain d'huile = 80°C.
◆ $\overline{\text{Mn}}$ₑₓₚ = 19 500 g/mole,
◆ $\overline{\text{Mn}}$_{théo} = 27 250 g/mole ; Rendement = 58 % ; $\overline{\text{Mw}}$/$\overline{\text{Mn}}$ = 1,14 (étalon de PMMA).

### Exemple 15

### Polymérisation de méthacrylate de méthyle

On procède comme dans l'exemple 1.
◆ [Ni{C₆H₃[CH₂N(CH₃)₂]₂-2,6}Br] = 33 mg (10⁻⁴ mole),
◆ Méthacrylate de méthyle = 1,87 g,
◆ [(CH₃)₂C(COC₆H₅)Br] (Bromure d'isobutyrophénone) =18,53 mg,
◆ Durée de polymérisation = 15 h,
◆ Température du bain d'huile = 80°C.
◆ $\overline{\text{Mn}}$ₑₓₚ = 12 250 g/mole ,
◆ $\overline{\text{Mn}}$_{théo} = 28 400 g/mole ; Rendement = 54 % ; $\overline{\text{Mw}}$/$\overline{\text{Mn}}$ = 1,1 (étalon de PMMA).

### Exemple 16

### Polymérisation de méthacrylate de méthyle

On procède comme dans l'exemple 1.
◆ [Ni{C₆H₃[CH₂N(CH₃)₂]₂-2,6}Br] = 0,34 g (10⁻³ mole),
◆ Méthacrylate de méthyle = 1,87 g,
◆ (CH₃)₂C(Br)CO₂éthyle = 172 mg,
◆ Toluène = 1 ml,
◆ Durée de polymérisation = 19 h,
◆ Température du bain d'huile = 60°C.
◆ $\overline{\text{Mn}}$ₑₓₚ = 3 600 g/mole ,
◆ $\overline{\text{Mn}}$_{théo} = 2 100 g/mole ; Rendement = 95 % ; $\overline{\text{Mw}}$/$\overline{\text{Mn}}$ = 1,2 (étalon de PMMA).

### Exemple 17

On procède comme dans l'exemple 1.
◆ [Ni{C₆H₃[CH₂N(CH₃)₂]₂-2,6}Br] = 0,34 g (10⁻³ mole),
◆ Méthacrylate de méthyle = 1,87 g,
◆ CCl₄ = 0,144 g,
◆ Toluène = 1 ml,
◆ Durée de polymérisation = 19 h,
◆ Température du bain d'huile = 60°C.
◆ $\overline{\text{Mn}}$ₑₓₚ = 1 250 g/mole,
◆ $\overline{\text{Mn}}$_{théo} = 1 980 g/mole ; Rendement = 100 % ; $\overline{\text{Mw}}$/$\overline{\text{Mn}}$ = 1,2 (étalon de PMMA).

### Exemple 18

### Polymérisation en masse du méthacrylate de méthyle

On procède comme dans l'exemple 1, mais sans toluène.
◆ [Ni{C₆H₃[CH₂N(CH₃)₂]₂-2,6}Br] = 29 mg (8,79 x 10⁻² mole),
◆ Méthacrylate de méthyle = 4,58 g,
◆ (CH₃)₂C(Br)CO₂éthyle = 7,64 mg (3,92 x 10⁻⁵ mole),
◆ Durée de polymérisation = 43 h,
◆ Température du bain d'huile = 80°C.

### Exemple 19

### Polymérisation en milieu dilué du méthacrylate de méthyle

On procède comme dans l'exemple 1.
◆ [Ni{C₆H₃[CH₂N(CH₃)₂]₂-2,6}Br] = 29 mg (8,79 x 10⁻² mole),
◆ Méthacrylate de méthyle = 4,58 g,
◆ (CH₃)₂C(Br)CO₂éthyle = 7,64 mg (3,92 x 10⁻⁵ mole),
◆ Toluène : 5 ml
◆ Durée de polymérisation = 43 h,
◆ Température du bain d'huile = 80°C.

| Tableau de résultats (étalon de PMMA) | | | | |
|---|---|---|---|---|
| **Exemple** | **Rdts (%)** | $\overline{\text{Mn}}$_{théo} **(g/mole)** | $\overline{\text{Mn}}$ₑₓₚ **(g/mole)** | $\overline{\text{Mw}}$/$\overline{\text{Mn}}$ |
| 18 | 77 | 89 800 | 97 900 | 1,64 |
| 19 | 50 | 58 900 | 64 800 | 1,16 |

### Exemple 20

### Polymérisation du méthacrylate de méthyle en masse à 20°C en présence de CH3CN

On procède comme dans l'exemple 2.
◆ [Ni{C₆H₃[CH₂N(CH₃)₂]₂-2,6}Br] = 32 mg (9,7 x 10⁻⁵ mole),
◆ Méthacrylate de méthyle = 1,68 g,
◆ CH3CN = 79 mg (1,9 x 10⁻³ mole),
◆ (CH₃)₂C(Br)CO₂éthyle = 15,7 mg (8 x 10⁻⁵ mole),
◆ Durée de polymérisation = 79 h,
◆ Température du bain d'huile = 20°C.
◆ $\overline{\text{Mn}}$ₑₓₚ = 12 700 g/mole,
◆ $\overline{\text{Mn}}$_{théo} = 6 200 g/mole ; Rendement = 31,4 % ; $\overline{\text{Mw}}$/$\overline{\text{Mn}}$ = 1,09 (étalon de PMMA).
Aux exemples 21 et 22, on prépare du polyméthacrylate de méthyle en l'absence de CH3CN, à différentes températures :

### Exemple 21

On procède comme dans l'exemple 1.
◆ [Ni{C₆H₃[CH₂N(CH₃)₂]₂-2,6}Br] = 38 mg (1,15 x 10⁻⁵ mole),
◆ Méthacrylate de méthyle = 1,87 g,
◆ (CH₃)₂C(Br)CO₂éthyle = 18,72 mg (9,6 x 10⁻⁵ mole),

### Exemple 22

On procède comme dans l'exemple 1.
◆ [Ni{C₆H₃[CH₂N(CH₃)₂]₂-2,6}Br] = 38 mg (1,15 x 10⁻⁵ mole),
◆ Méthacrylate de méthyle = 1,87 g,
◆ (CH₃)₂C(Br)CO₂éthyle = 18,72 mg (9,6 x 10⁻⁵ mole),

| Tableau de résultats (étalon de PMMA) | | | | | | |
|---|---|---|---|---|---|---|
| **Exemple** | **Temp (°C)** | **Rdts (%)** | **Temps (h)** | $\overline{\text{Mn}}$_{théo} **(g/mole)** | $\overline{\text{Mn}}$ₑₓₚ **(g/mole)** | $\overline{\text{Mw}}$/$\overline{\text{Mn}}$ |
| 21 | 60 | 30 | 7 | 5 850 | 7 400 | 1,28 |
| 22 | 80 | 38,5 | 5 | 7 500 | 11 100 | 1,18 |

On peut noter que l'augmentation de température permet d'améliorer le rendement et la polydispersité est plus faible à plus haute température.

### Exemple 23

On procède comme dans l'exemple 1, mais la polymérisation se fait en masse.
◆ [Ni{C₆H₃[CH₂N(CH₃)₂]₂-2,6}Br] = 1,48 mg (4,48 x 10⁻⁶ mole),
◆ Méthacrylate de méthyle = 0,88 g,
◆ (CH₃)₂C(Br)CO₂éthyle = 8,9 mg (4,56 x 10⁻⁵ mole),
◆ Température du bain d'huile = 70°C.

### Exemple 24

On procède comme dans l'exemple 23.
◆ [Ni{C₆H₃[CH₂N(CH₃)₂]₂-2,6}Br] = 28,2 mg (8,54 x 10⁻⁵ mole),
◆ Méthacrylate de méthyle = 0,84 g,
◆ (CH₃)₂C(Br)CO₂éthyle = 8,4 mg (4,3 x 10⁻⁵ mole),
◆ Température du bain d'huile = 70°C

### Exemple 25

On procède comme dans l'exemple 23.
◆ [Ni{C₆H₃[CH₂N(CH₃)₂]₂-2,6}Br] = 15,7 mg (4,75 x 10⁻⁵ mole),
◆ Méthacrylate de méthyle = 1,87 g,
◆ (CH₃)₂C(Br)CO₂éthyle = 18,7 mg (9,58 x 10⁻⁵ mole),
◆ Température du bain d'huile = 70°C

| Tableau de résultats (étalon de PMMA) | | | | | |
|---|---|---|---|---|---|
| **Exemple** | **Temp (h)** | **Rdts (%)** | $\overline{\text{Mn}}$_{théo} **(g/mole)** | $\overline{\text{Mn}}$ₑₓₚ **(g/mole)** | $\overline{\text{Mw}}$/$\overline{\text{Mn}}$ |
| 23 | 47 | 59 | 11 500 | 13 560 | 1,25 |
| 24 | 3,5 | 43,7 | 8 500 | 10 400 | 1,19 |
| 25 | 4,5 | 25 | 4 870 | 7 500 | 1,23 |

### Exemple 26

### Polymérisation du styrène en masse

On procède comme dans l'exemple 1, mais la polymérisation a lieu en masse.
◆ [Ni{C₆H₃[CH₂N(CH₃)₂]₂-2,6}Br] = 43 mg (1,3 x 10⁻⁴ mole),
◆ Styrène = 0,9 g,
◆ [(C₆H₅)CH(CH₃)Cl] = 6,11 mg (4,35 x 10⁻⁵ mole),
◆ Durée de polymérisation = 63 h,
◆ Température du bain d'huile = 90°C ◆ $\overline{\text{Mn}}$ₑₓₚ = 20600 g/mole ,
◆ $\overline{\text{Mn}}$_{théo} = 13950g/mole ; Rendement = 67 % ; $\overline{\text{Mw}}$/$\overline{\text{Mn}}$ = 1,55 (étalon de PS).

### Exemple 27

### Polymérisation en masse du méthacrylate de n-butyle

On procède comme dans l'exemple 1, mais la polymérisation a lieu en masse.
◆ [Ni{C₆H₃[CH₂N(CH₃)₂]₂-2,6}Br] = 33,8 mg (10⁻⁴ mole),
◆ Méthacrylate de n-butyle = 1,78 g,
◆ (CH₃)₂C(Br)CO₂éthyle = 17,47 mg (8,95 x 10⁻⁵ mole),
◆ Durée de polymérisation = 5 h,
◆ Température du bain d'huile = 95°C
◆ $\overline{\text{Mn}}$ₑₓₚ = 21400 g/mole ,
◆ $\overline{\text{Mn}}$_{théo} = 18 500g/mole ; Rendement = 93,2 % ; $\overline{\text{Mw}}$/$\overline{\text{Mn}}$ = 1,14 (étalon de PMMA).

### Exemple 28 (comparatif)

On opère comme à l'exemple 2, mais sans utiliser de composé générateur de radicaux (CCl₄).
◆ [[Ni{C₆H₃[CH₂N(CH₃)₂]₂-2,6-}Br]] = 43,7 mg
◆ Méthacrylate de méthyle = 0,936 g
◆ Toluène = 0,4 ml
◆ CH₃CN = 1,64 mg (4x10⁻⁵ mole)
◆ Durée de polymérisation = 22 h
◆ Température du bain d'huile = 78°C
◆ Rendement = 15 %
◆ $\overline{\text{Mn}}$ₑₓₚ = 245 000 g/mole
◆ $\overline{\text{Mn}}$_{théo} = 3 500 g/mole
◆ $\overline{\text{Mw}}$/$\overline{\text{Mn}}$ = 3,12.

### Exemple 29 (comparatif)

On opère comme à l'exemple 2, mais sans utiliser de catalyseur :
◆ Méthacrylate de méthyle = 0,936 g
◆ CCl₄ = 6,16 mg (4x10⁻⁵ mole)
◆ CH₃CN = 1,64 mg (4x10⁻⁵ mole)
◆ Toluène = 0,4 ml
◆ Durée de polymérisation = 22 h
◆ Température du bain d'huile = 78°C
◆ Rendement = 0.

Les exemples 30 à 32 concernent la polymérisation en masse de méthacrylate de méthyle en présence d'AIBN.

### Exemple 30

On opère comme à l'exemple 1, avec les composants suivants :
◆ [Ni{C₆H₃[CH₂N(CH₃)₂]₂-2,6}Br] = 75,1 mg (1,83 x 10⁻⁴ mole)
◆ AIBN = 9,1 mg (5,54 x 10⁻⁵ mole)
◆ Méthacrylate de méthyle = 0,936 g
◆ Durée de polymérisation = 45 h
◆ Température du bain d'huile = 85°C
◆ $\overline{\text{Mn}}$ₑₓₚ = 7 800 g/mole ,
◆ $\overline{\text{Mn}}$_{théo} = 5 650g/mole ; Rendement = 67,3 % ; $\overline{\text{Mw}}$/$\overline{\text{Mn}}$ = 1,2 (étalon de PMMA).

### Exemple 31

On opère comme à l'exemple 30.
◆ [Ni{C₆H₃[CH₂N(CH₃)₂]₂-2,6}Br] = 20,5 mg (5 x 10⁻⁵ mole)
◆ AIBN = 3,77 mg (2,3 x 10⁻⁵ mole)
◆ Méthacrylate de méthyle = 0,936 g
◆ Durée de polymérisation = 48 h
◆ Température du bain d'huile = 85°C
◆ $\overline{\text{Mn}}$ₑₓₚ = 27 500 g/mole ,
◆ $\overline{\text{Mn}}$_{théo} = 13 700g/mole ; Rendement = 68 % ; $\overline{\text{Mw}}$/$\overline{\text{Mn}}$ = 1,06 (étalon de PMMA).

### Exemple 32

### Polymérisation du méthacrylate de méthyle en présence de [Ni{C₆H₃[CH₂N(CH₃)₂]₂-2,6}O₂CCF₃]

◆ [Ni{C₆H₃[CH₂N(CH₃)₂]₂-2,6}O₂CCF₃] = 0,116 g (3,19 x 10⁻⁴ mole)
◆ (CH₃)₂C(Br)CO₂éthyle = 51,88 mg (2,65 x 10⁻⁴ mole)
◆ Méthacrylate de méthyle = 0,56 g
◆ Toluène = 1 ml
◆ Durée de polymérisation = 45 h
◆ Température du bain d'huile = 80°C
◆ $\overline{\text{Mn}}$ₑₓₚ = 2 600 g/mole ,
◆ $\overline{\text{Mn}}$_{théo} = 2 100g/mole ; Rendement = 100 % ; $\overline{\text{Mw}}$/$\overline{\text{Mn}}$ = 1,3 (étalon de PMMA).

### Exemple 33

### Polymérisation en masse du méthacrylate de méthyle

On opère comme à l'exemple 32 mais la polymérisation a lieu en masse :
◆ [Ni{C₆H₃[CH₂N(CH₃)₂]₂-2,6}O₂CCF₃] = 0,116 g (3,19 x 10⁻⁴ mole)
◆ (CH₃)₂C(Br)CO₂éthyle = 17,38 mg (8,91 x 10⁻⁵ mole)
◆ Méthacrylate de méthyle = 1,49 g
◆ Durée de polymérisation = 20,5 h
◆ Température du bain d'huile = 70°C

### Exemple 34

### Polymérisation en masse du méthacrylate de méthyle

On opère comme à l'exemple 33 mais la durée de polymérisation est de 28 h.

| Tableau de résultats (étalon PMMA) | | | | | |
|---|---|---|---|---|---|
| **Exemple** | **Rdts (%)** | **Temp (h)** | $\overline{\text{Mn}}$_{théo} **(g/mole)** | $\overline{\text{Mn}}$ₑₓₚ **(g/mole)** | $\overline{\text{Mw}}$/$\overline{\text{Mn}}$ |
| 33 | 39 | 20,5 | 7 155 | 13 500 | 1,25 |
| 25 | 48 | 28 | 8 900 | 16 500 | 1,21 |

### Exemple 35

### Exemple de reprise de même monomère :

Cet exemple montre qu'avec le procédé selon l'invention, il n'y a pas de réactions de terminaison. Il montre donc qu'il est possible de faire une reprise de monomère si on introduit, après la polymérisation de la première séquence, une autre quantité de monomère.
◆ [Ni{C₆H₃[CH₂N(CH₃)₂]₂-2,6}Br] = 43,5 mg
◆ Méthacrylate de méthyle = 0,936 g (première dose)
◆ CCl₄ = 6,16 mg (4x10⁻⁵ mole)
◆ Toluène = 0,4 ml
◆ CH₃CN = 1,64 mg (4x10⁻⁵ mole)
◆ Durée de polymérisation = 22 h
◆ Température du bain d'huile = 78°C
◆ Rendement = 80 %
◆ $\overline{\text{Mn}}$ₑₓₚ = 12 300 g/mole
◆ $\overline{\text{Mw}}$/$\overline{\text{Mn}}$ = 1,16

On ajoute alors une deuxième dose de monomère et on continue la polymérisation :
◆ Méthacrylate de méthyle = 0,936 g
◆ Durée de polymérisation = 23 h
◆ Température du bain d'huile = 78°C
◆ Rendement = 85 %
◆ $\overline{\text{Mn}}$ₑₓₚ (copolymère) = 22 800 g/mole
◆ $\overline{\text{Mw}}$/$\overline{\text{Mn}}$ = 1,25.

### Exemple 36

### Exemple de reprise de méthacrylate de méthyle :

*Première séquence :*
   ◆ [Ni{C₆H₃[CH₂N(CH₃)₂]₂-2,6}Br] = 63 mg (2,2 x 10⁻⁴ mole)
   ◆ Méthacrylate de méthyle = 0,936 g
   ◆ (CH₃)₂C(Br)CO₂éthyle = 18,8 mg (9,6 x10⁻⁵ mole)
   ◆ Toluène = 1 ml
   ◆ Durée de polymérisation = 45 h
   ◆ Température du bain d'huile = 80°C
   ◆ Rendement = 94 %
   ◆ $\overline{\text{Mn}}$ₑₓₚ = 12 250 g/mole
   ◆ $\overline{\text{Mn}}$_{théo} = 9 700 g/mole
   ◆ $\overline{\text{Mw}}$/$\overline{\text{Mn}}$ = 1,09 (étalon de PMMA)
*Deuxième séquence :*
   ◆ Méthacrylate de méthyle = 0,936 g
   ◆ Toluène = 1 ml
   ◆ Durée de polymérisation = 47 h
   ◆ Température du bain d'huile = 80°C
   ◆ Rendement = 100 %
   ◆ $\overline{\text{Mn}}$ₑₓₚ = 27 800 g/mole
   ◆ $\overline{\text{Mn}}$_{théo} = 19 400 g/mole
   ◆ $\overline{\text{Mw}}$/$\overline{\text{Mn}}$ = 1,12(étalon de PMMA)

### Exemple 37

### Exemple de copolymérisation séquencée de méthacrylate de n-butyle et de méthacrylate de méthyle :

*Première séquence : polymérisation en masse*
   ◆ [Ni{C₆H₃[CH₂N(CH₃)₂]₂-2,6}Br] = 0,141 g (4,2 x 10⁻⁴ mole)
   ◆ Méthacrylate de n-butyle = 1,78 g
   ◆ (CH₃)₂C(Br)CO₂éthyle = 33,94 mg (1,74x10⁻⁴ mole)
   ◆ Durée de polymérisation = 29 h
   ◆ Température du bain d'huile = 60°C
   ◆ Rendement = 100 %
   ◆ $\overline{\text{Mn}}$ₑₓₚ = 11 100 g/mole
   ◆ $\overline{\text{Mn}}$_{théo} = 10 300 g/mole
   ◆ $\overline{\text{Mw}}$/$\overline{\text{Mn}}$ = 1,18 (étalon de PS)
*Deuxième séquence :*
   ◆ Méthacrylate de méthyle = 1,87 g
   ◆ THF = 3ml
   ◆ Durée de polymérisation = 42 h
   ◆ Température du bain d'huile = 60°C
   ◆ Rendement = 70 %
   ◆ $\overline{\text{Mn}}$ₑₓₚ = 23 200 g/mole
   ◆ $\overline{\text{Mn}}$_{théo} = 17 800 g/mole
   ◆ $\overline{\text{Mw}}$/$\overline{\text{Mn}}$ = 1,15(étalon de PS)

## Revendications

1. Procédé de polymérisation ou copolymérisation radicalaire contrôlée de monomères (méth) acryliques et/ou vinyliques, caractérisé en ce qu'on polymérise ou copolymérise en masse, solution, émulsion ou suspension, à une température pouvant descendre jusqu'à 0°C, au moins un desdits monomères en présence d'un système d'amorçage comprenant un composé générateur de radicaux et au moins un catalyseur constitué par un complexe de métal comportant un ligand du type
[C₆H₂(CH₂NR¹R²)₂-2,6-R³-4]⁻ (I)
dans lequel :
R¹ et R², identiques ou différents, représentent un groupe alkyle en C₁-C₄, ramifié ou non ou un groupe phényle, ou bien R¹ et R² forment avec l'atome d'azote auquel ils sont reliés une amine cyclique ou bien les deux R², pris ensemble, forment un pont polyméthylène,
R₃ représente un atome d'hydrogène, un groupe alkyle, benzyle ou un groupe fonctionnel donneur ou accepteur d'électrons,

2. Procédé suivant la revendication 1 caractérisé en ce que le ligand du catalyseur de polymérisation ou copolymérisation répond à l'une des formules générales suivantes 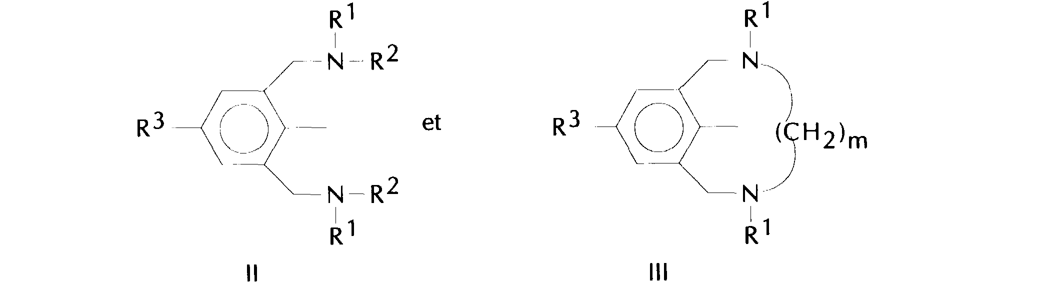 dans lesquelles :
R¹, R² et R³ son tels que définis précédemment ; et m est un nombre entier valant de 7 à 10.

3. Procédé suivant l'une ou l'autre des revendications 1 et 2, caractérisé en ce que le catalyseur de polymérisation répond à l'une des formules générales suivantes: 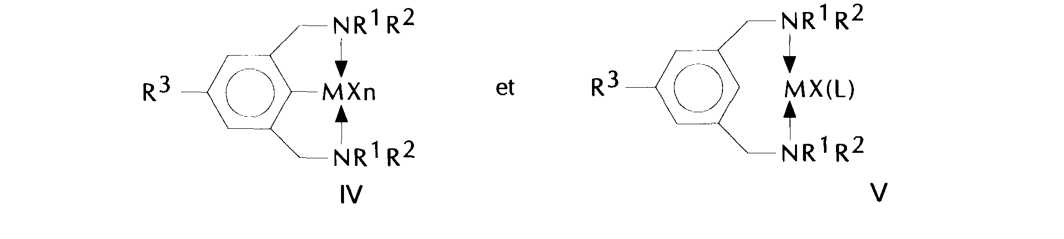 dans lesquelles :
R¹, R² et R³ sont tels que définis précédemment ;
M représente un élément métallique de transition, particulièrement un métal du groupe VIII du Tableau de Classification périodique des éléments, choisi parmi les éléments Ni, Pd, Pt, Co, Rh, Ir, Fe, Ru et Os.
X représente un groupe anionique monoatomique ou polyatomique, de préférence un atome d'halogène ou un groupe nitro, nitrate, R⁴COO- où R⁴ représente un atome d'hydrogène, un alkyle en C₁-C₁₄, CF₃ ou CCl₃ ou R⁵SO₃- où R⁵ représente un alkyle en C₁-C₁₄ ou CF₃.
n représente un nombre entier égal à 0, 1 ou 2 ; et
L représente un ligand stabilisateur du type base de Lewis, de préférence un groupe pyridinyle, phosphine ou phosphite.

4. Procédé suivant l'une quelconque des revendications 1 à 3, caractérisé en ce que, dans les formules I à V,
R₁ et R₂ représentent chacun un groupe choisi parmi les groupes méthyle, éthyle, isopropyle, tert-butyle et phényle ou bien forment avec l'atome d'azote auquel ils sont reliés un cycle pyrrolidinyle ou proline, ou bien les deux R₂, pris ensemble, forment un pont polyméthylène.
R₃ représente un atome d'hydrogène, de chlore, un groupe alkyle en C₁-C₅, un groupe benzyle ou un groupe cyano, nitro, amino primaire, secondaire ou tertiaire, alcoxy en C₁-C_{5,} , benzyloxy, amide, acyle ou imine.

5. Procédé suivant la revendication 3, caractérisé en ce que le catalyseur est supporté par ou greffé sur au moins un groupement organique ou inorganique à partir du substituant R₃ du ligand, de préférence sur un groupement polymère choisi parmi les polysilanes et les polysiloxanes.

6. Procédé suivant la revendication 3, caractérisé en ce que le métal M est du Ni^{II}, Ni^{III}, Pd^{II}, Pt^{II}, Co^{II}, Ru^{II} ou Fe^{III}.

7. Procédé suivant l'une quelconque des revendications 3 à 6, caractérisé en ce que le catalyseur est le [Ni{C₆H₃[CH₂N(CH₃)₂]₂-2,6}Br], [Ni{C₆H₃[CH₂N(CH₃)₂]₂-2,6}Cl] ou [Ni{CH₃O-4-C₆H₂[CH₂N(CH₃)₂]₂-2,6}Br].

8. Procédé suivant l'une quelconque des revendications 1 à 7, caractérisé en ce que le composé générateur de radicaux est un composé halogéné activé par des effets électroniques donneurs et/ou récepteurs sur l'atome de carbone en position α du ou des halogènes dudit composé.

9. Procédé suivant la revendication 8, caractérisé en ce que le composé générateur de radicaux est monofonctionnel et choisi dans les classes de composés halogénés suivantes :
a) les tri-ou tétrahalométhanes de formule CYZ₃ où Y = Cl, Br ou H et Z = Cl ou Br;
b) les dérivés trichlorométhylés de formule R⁶CCl₃ où R⁶ représente un groupe phényle, benzyle, benzoyle, acyle dans lequel le groupe alkyle est en C₁-C₁₄, éthyl OC(O), CH₃, mésityle, CF₃ ou NO₂ ;
c) les halogénures d'alkyle de formules : 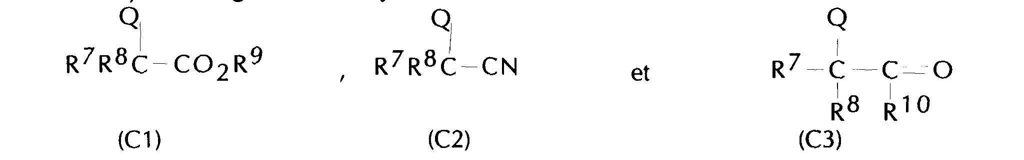 où R⁷, R⁸ et R⁹ représentent chacun un atome d'hydrogène, un groupe alkyle en C₁-C₁₄ ou un groupe aromatique, R¹⁰ est un groupe alkyle en C₁-C₁₄, phényle ou isocyanate, et Q représente Cl, Br, OOCCF₃ ou O₃SCF₃ ;
d) les halogénures d'alkyle de formule : 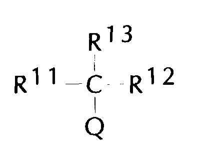 où R¹¹ et R¹², identiques ou différents, représentent un groupe alkyle en C₁-C₁₄ ou un groupe alcool primaire -CH₂OH et R¹³ un groupe hydroxyle, nitro, amino substitué ou non, alcoxy en C₁-C₁₄, acyle, acide carboxylique, ester et Q a la signification donnée précédemment ;
e) des composés lactone ou lactame halogénés en position α, tels que les composés α-bromo-α-méthyl-γ-butyrolactone et α-bromo-γ-valérolactone;
f) les halogénures benzyliques de formule : 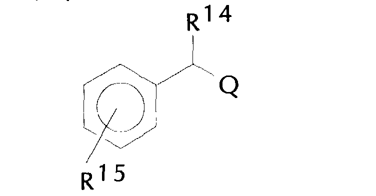 où R¹⁴ représente un atome d'hydrogène, un groupe alkyle en C₁-C₁₄ ou un groupe acide carboxylique, ester, nitrile ou cétone, R¹⁵ représente un atome d'hydrogène ou un groupe alkyle en C₁-C₁₄, hydroxyle, acyle, amine, nitro, alcoxy en C₁-C₁₄ ou sulfonate et Q a la signification donnée précédemment ;
g) les N-halosuccinimides et les N-halophtalimides ; et
h) les halogénures d'alkyl sulfonyle de formule R¹⁶SO₂V où R¹⁶ représente un groupe alkyle en C₁-C₁₄ et V un atome de chlore ou de brome ;

10. Procédé suivant la revendication 8, caractérisé en ce que le composé générateur de radicaux est bifonctionnel et est constitué par deux groupements générateurs de radicaux monofonctionnels des classes c) à h) précitées reliés par une chaîne d'unités méthylène ou par un cycle benzénique de préférence en position méta de celui-ci, par l'anhydride d'acide chloroacétique, par l'anhydride d'acide chlorodifluoroacétique ou par un tri-ou tétrahalométhane ou un dérivé trichlorométhylé tel que défini respectivement dans les classes a) et b) précitées.

11. Procédé suivant la revendication 8, caractérisé en ce que le composé générateur de radicaux est multifonctionnel et est constitué par au moins trois groupements générateurs de radicaux monofonctionnels des classes c) à h) précitées reliés entre eux par un cycle benzénique ou par un tri-ou tétrahalométhane de la classe a) précitée.

12. Procédé suivant la revendication 9, caractérisé en ce que le composé générateur de radicaux est le tétrachlorure de carbone, le trichloroacétate d'éthyle, le 2-bromo-isobutyrate d'éthyle.

13. Procédé suivant la revendication 8, caractérisé en ce que le composé générateur de radicaux est le trichloroacétate de sodium, le trichloroacétate de potassium, le chlorodifluoroacétate de sodium, le chlorodifluoroacétate de potassium et le chloroacétate de sodium.

14. Procédé suivant l'une quelconque des revendications 1 à 7, caractérisé en ce que le composé générateur de radicaux est choisi parmi les peroxydes et les composés azotiques, en particulier le peroxyde de dibenzoyle ou le 2,2'-azo-bis-isobutyronitrile.

15. Procédé suivant l'une quelconque des revendications 1 à 14, caractérisé en ce que la polymérisation ou copolymérisation est effectuée à une température de 0°C à 150°C, de préférence 50 à 110°C.

16. Procédé suivant l'une quelconque des revendications 1 à 15, caractérisé en ce que la réaction de polymérisation ou copolymérisation est effectuée en présence d'au moins un additif polaire, choisi dans le groupe comprenant l'acétonitrile, l'eau, la pyridine, le tétrahydrofuranne, l'éther diéthylique, le diméthylsulfoxyde, l'acétone et leurs mélanges.

17. Procédé suivant l'une quelconque des revendications 1 à 16, caractérisé en ce que le rapport molaire du catalyseur au composé générateur de radicaux est de 0,01 à 100, de préférence de 0,1 à 5.

18. Procédé suivant l'une quelconque des revendications 1 à 17, caractérisé en ce que le rapport molaire du ou des monomères au catalyseur est de 1 à 10.000, de préférence de 50 à 2000.

19. Procédé suivant l'une quelconque des revendications 1 à 18, caractérisé en ce que le rapport molaire additif polaire/catalyseur est de 0 à 100, de préférence de 0 à 40.

20. Procédé suivant l'une quelconque des revendications 1 à 19, caractérisé en ce que les monomères polymérisables ou copolymérisables comprennent au moins un monomère choisi parmi les méthacrylates, les acrylates, les dérivés vinylaromatiques, l'acétate de vinyle.

21. Procédé suivant la revendication 20, caractérisé en ce que le monomère est choisi dans le groupe comprenant le méthacrylate de méthyle, le méthacrylate d'éthyle, le méthacrylate de n-butyle, l'acrylonitrile et le styrène.

22. Polymères ou copolymères obtenus suivant l'une quelconque des revendications 1 à 21, caractérisés en ce qu'ils ont une masse moléculaire $\overline{\text{Mn}}$ entre 400 et 1.000.000 g/mole et une polymolécularité $\overline{\text{Mw}}$/$\overline{\text{Mn}}$ inférieure à 2.

23. Copolymères séquencés obtenus suivant l'une quelconque des revendications 1 à 21, caractérisés en ce que chaque séquence à une masse moléculaire $\overline{\text{Mn}}$ entre 400 et 1.000.000 g/mole et une polymolécularité $\overline{\text{Mw}}$/$\overline{\text{Mn}}$ inférieure à 2.
